(19) Europäisches Patentamt
European Patent Office
Office européen des brevets

(11) **EP 1 308 493 B1**

(12) **EUROPÄISCHE PATENTSCHRIFT**

(45) Date of publication and mention of the grant of the patent:
**22.11.2006 Bulletin 2006/47**

(51) Int Cl.:
*C09J 153/00* (2006.01) *C09J 7/02* (2006.01)
*C08F 295/00* (2006.01) *C08F 257/02* (2006.01)

(21) Application number: **02022493.7**

(22) Date of filing: **05.10.2002**

(54) **Reversible pressure sensitive adhesives based on acrylic block copolymers**

Reversible Haftklebemassen auf der Basis von Acrylatblockcopolymeren

Adhesifs a base de copolymeres-blocs acryliques reversibles sensibles a la pression

(84) Designated Contracting States:
**DE ES FR GB IT**

(30) Priority: **31.10.2001 DE 10153713**

(43) Date of publication of application:
**07.05.2003 Bulletin 2003/19**

(73) Proprietor: **tesa AG**
**20253 Hamburg (DE)**

(72) Inventors:
- **Husemann, Marc**
**22605 Hamburg (DE)**
- **Dollase, Thilo**
**22391 Hamburg (DE)**

(56) References cited:
**EP-A- 0 349 270** **EP-A- 0 413 457**
**EP-A- 1 008 640** **EP-A- 1 127 934**
**EP-A- 1 132 410** **WO-A-00/39233**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The invention relates to pressure sensitive adhesives (PSAs) which comprise at least one PSA based on at least one block copolymer and can be removed reversibly from paper.

Reversible pressure sensitive adhesives are used very diversely for a very wide variety of applications. A basic prerequisite is that these PSA tapes can be removed again from the various substrates after bonding, even when the bond has been in place for a long time. Moreover, the PSA tapes ought to be removable without residue and without damaging the substrate. Examples of commercial applications include adhesive masking tapes, labels, sticky memo notes, plasters, and protective films. The bonds are made to a wide variety of substrates, such as metal, plastic, skin or paper, for example. The term "reversible" should be understood below as relating to the possibility of redetaching a PSA strip from a substrate without destruction.
The greatest challenge in this respect is that of adhesive bonding to paper, since paper tends readily to tearing when the PSA tape is removed.

As a result of the multiplicity of commercial applications, a variety of routes have been taken to preparing reversible PSAs. One fundamental route is the structuring of the PSA, where the reversibility is produced by a reduction in the surface area of pressure sensitive adhesion. One possibility for this route is described in WO 85/04602 A1. There, a PSA tape of given bond strength is taken, the bond area is reduced by means of a special pattern/structure, and hence the bond strength of the PSA tape is lowered.

A similar route has been described in US 4,587,152. There, a pressure sensitive adhesive sheet was produced in a screen printing process. The pressure sensitive adhesion properties can be controlled in accordance with the structure produced.

US 5,194,299 applies PSA islands, for which the spray process is preferably employed. From 10 to 85% of the area are therefore covered by the PSA. Here, furthermore, the technical adhesive properties can be controlled by the population density of these islands.

US 4,889,234 claims PSA labels. Here again, the surface area of pressure sensitive adhesion is reduced by generating a structure in the adhesive.

The abovementioned technologies all make use of the same technique. The surface area of pressure sensitive adhesion acquires reversible bonding properties through a reduction in the active surface area of pressure sensitive adhesion. The area is reduced in turn by means of different technical coating methods, such as screen printing, spray coating or microstructuring, for example.
However, no coating methods have been described in which PSAs, directly following conventional coating from solution or from the melt, undergo transition to a system composed of tacky and nontacky segments. Moreover, there is always a need for an additional process for structuring.

In addition to structuring by means of coating/patterning, a structure may likewise be achieved, and hence the reversibility of a PSA obtained, by means of targeted crosslinking. US 4,599,265 describes acrylic PSAs which are crosslinked in segmented fashion. For this process it is likewise possible to employ a conventional solvent coating, although the subsequent structuring by crosslinking is technically very complex.

US 6,123,890, for its part, describes a microstructured PSA tape with very good repositionability, and an associated production process. In the production process described the PSA is applied to a structured "molding tool" where it adopts the structure, before being applied with the unchanged structure to a substrate. The structured PSA tape is hence produced in a transfer process.

This process as well, relative to the abovementioned processes and polymers, has the disadvantage that structuring must be performed solely by means of a technical pattern.

In addition to structuring, there is a further approach to the production of reversible PSAs. Generally, there is the possibility of chemically modifying PSAs so that the bond strength falls. One chemical solution is provided by PSA tapes with grafted polysiloxane units, described in US 4,693,935. Although this method does offer a polymer with reversibility, the technical adhesive properties are difficult to control.

Accordingly, the need exists for a reversible pressure sensitive adhesive which combines the approaches of chemical modification with those of technical structuring. Simple industrial processes favor conventional solvent coating or coating from the melt.

It is an object of this invention, therefore, to provide improved, reversibly bondable pressure sensitive adhesive tapes which exhibit the disadvantages of the prior art only to a reduced extent if at all.

Surprisingly, and unforeseeably for the skilled worker, this object is achieved by the pressure sensitive adhesives of the invention such as they are depicted in the main claim and in the subclaims. A pressure sensitive adhesive (PSA) of this kind is able automatically, without technical modification, through self-organization, to form tacky and nontacky segments. The claims further relate to the use of such PSAs.

A feature of these systems is that they are based on a pressure sensitive adhesive, itself based on acrylic block copolymers, which meets the abovementioned specifications and is notable in particular for the following criteria:

- possibility of using a large number of monomers for synthesizing the PSA, so that a broad palette of pressure sensitive adhesion properties can be set by means of the chemical composition,
- frequent reusability of the PSA tapes,
- enablement of the production of thick, highly cohesive PSA layers without additional crosslinking, such as may be necessary for repositionable PSA tapes,
- possibility of choice in the use of comonomers, which permits the thermal shear strength to be controlled and, in particular, a persistently good cohesion and thus holding power at high temperature (> +60 °C),
- reversibility on different surfaces, allowing bonds to be made to paper in particular.

The systems of the invention based on acrylic block copolymer pressure sensitive adhesives that are provided by this invention feature residueless and nondestructive detachment.

Reversible systems here and below are single-sidedly or double-sidedly pressure sensitively adhesive self-adhesive sheets and self-adhesive strips which are used for fixing on a material or for fixing two materials to one another and in the case of which residueless and nondestructive redetachment can take place even following prolonged bonding.

The main claim relates accordingly to pressure sensitive adhesive systems for reversible bonds, comprising at least one pressure sensitive adhesive based on at least one block copolymer, the weight fractions of the block copolymers accounting in total for at least 50% of the pressure sensitive adhesive, at least one block copolymer being composed at least in part on the basis of (meth)acrylic acid derivatives, additionally at least one block copolymer comprising at least the unit P(A)-P(B)-P(A) composed of at least one polymer block P(B) and at least two polymer blocks P (A), where

- P(A) independently of one another represent homopolymer and/or copolymer blocks of monomers A, the polymer blocks P(A) each having a softening temperature in the range from + 20°C to + 175°C,
- P(B) represents a homopolymer or copolymer block of monomers B, the polymer block P(B) having a softening temperature in the range from -130°C to +10°C,
- the polymer blocks P(A) and P(B) are not homogeneously miscible with one another, and
- the (co)polymers P*(A) and P*(B) corresponding to the polymer blocks P(A) and P(B) each possessing a surface tension of ≤ 45 mJ/m$^2$.

Reference to the (co)polymers P*(A) and P*(B) is to those homopolymers or copolymers which possess a construction and a chemical structure corresponding to the associated polymer blocks P(A) and P(B), respectively, but without being attached as a block to one or more further blocks. In the (co)polymers P*(A) and P*(B), the linking sites to further polymer blocks that are present in the polymer blocks are satisfied, in particular by hydrogen.

The softening temperature in this context is the glass transition temperature in the case of amorphous systems and the melting temperature in the case of semicrystalline polymers. Glass temperatures are reported as results of quasistatic methods such as differential scanning calorimetry (DSC), for example.

The surface tension is measured against air under standard conditions: that is at 50% atmospheric humidity, a temperature of 23°C, and atmospheric pressure. Surface tensions of adhesives can be determined by investigating the wetting and dewetting behavior of a test substance of known surface tension on a test strip. Contact angle measurements in particular provide very useful information.
As a general literature reference for surface tensions, reference may be made to A.W. Adamson, Physical Chemistry of Surfaces, 5th ed., 1990, Wiley, New York.

Reversible systems which have been found particularly advantageous in the context of the invention are those wherein the construction of at least one block copolymer can be described by one or more of the following general formulae:

$$P(A)\text{-}P(B)\text{-}P(A) \qquad (I)$$

$$P(B)\text{-}P(A)\text{-}P(B)\text{-}P(A)\text{-}P(B) \qquad (II)$$

$$[P(B)\text{-}P(A)]_nX \qquad (III)$$

$$[P(B)\text{-}P(A)]_nX[P(A)]_m \qquad (IV),$$

- where n = 3 to 12, m = 3 to 12, and X is a polyfunctional branching unit, i.e., a chemical building block via which different polymer arms are linked to one another;
- where the polymer blocks P(A) independently of one another represent homopolymer and/or copolymer blocks of the monomers A, the polymer blocks P(A) each having a softening temperature in the range fom +20°C to +175°C,
- where the polymer blocks P(B) independently of one another represent homopolymer and/or copolymer blocks of the monomers B, the polymer blocks P(B) each having a softening temperature in the range from -130°C to +10°C,
- and where the (co)polymers P*(A) and P*(B) corresponding to the polymer blocks P(A) and P(B) each possess a surface tension of ≤ 45 mJ/m$^2$.

With preference two or more, with particular preference all, of the polymer blocks can be described in accordance with one or more of the formulae (I) to (IV).

The polymer blocks P(A) as described in the main claim or in the advantageous embodiments can comprise polymer chains of a single monomer type from group A, or copolymers of monomers of different structures from group A. In particular, the monomers A used can vary in their chemical structure and/or in the length of the side chain. The polymer blocks therefore span the range between completely homogeneous polymers, via polymers composed of monomers of identical chemical parent structure but differing in chain length, and those with the same number of carbons but different isomerism, through to randomly polymerized blocks composed of monomers of different length with different isomerism from group A. The same applies to the polymer blocks P(B) in respect of the monomers from group B.

The unit P(A)-P(B)-P(A) may be either symmetrical [corresponding to $P^1$(A)-P(B)-$P^2$(A) where $P^1$(A) = $P^2$(A)] or asymmetric [corresponding, for instance, to the formula $P^3$(A)-P(B)-$P^4$(A) where $P^3$(A) ≠ $P^4$(A), but where both $P^3$(A) and $P^4$ (A) are each polymer blocks as defined for P(A)] in construction.

An advantageous configuration is one in which the block copolymers have a symmetrical construction such that there are polymer blocks P(A) identical in chain length and/or chemical structure and/or there are polymer blocks P(B) identical in chain length and/or chemical structure.

$P^3$(A) and $P^4$(A) may differ in particular in their chemical composition and/or in their chain length.

As monomers for the elastomer block P(B) it is advantageous to use acrylic monomers. For this it is possible in principle to use all acrylic compounds which are familiar to the skilled worker and suitable for synthesizing polymers. It is preferred to choose monomers which, even in combination with one or more further monomers, produce polymer block P(B) glass transition temperatures of less than +10 °C and lower the surface tension.

Accordingly, it is possible with preference to choose the vinyl monomers.

In accordance with the comments made above and below, in order to obtain a polymer glass transition temperature $T_G$ of $T_G \leq 10$°C, the monomers are very preferably selected such, and the quantitative composition of the monomer mixture is advantageously selected such, that in accordance with equation (G1) (in analogy to the ***Fox*** equation, cf. T.G. Fox, Bull. Am. Phys. Soc. 1 (1956) 123) the polymer develops the desired $T_G$.

$$\frac{1}{T_G} = \sum_n \frac{w_n}{T_{G,n}} \qquad (G1)$$

In this equation, n represents the serial number of the monomers used, $w_n$ the mass fraction of the respective monomer n (% by weight), and $T_{G,n}$ the respective glass transition temperature of the homopolymer of the respective monomer n in K.

The polymer blocks P(B) are advantageously prepared using from 75 to 100% by weight of acrylic and/or methacrylic acid derivatives of the general structure

$$CH_2=CH(R^1)(COOR^2) \qquad (V)$$

where $R^1$ = H or $CH_3$ and $R^2$ = H or linear, branched or cyclic, saturated or unsaturated alkyl radicals having from 1 to 30, in particular from 4 to 18, carbon atoms and where appropriate from 0 to 25% by weight of vinyl compounds (VI) which in favorable cases contain functional groups.

Acrylic monomers used with great preference for compound (V) as components for polymer blocks P(B) comprise acrylic and methacrylic alkyl esters having alkyl groups composed of from 4 to 18 carbon atoms. Specific examples of such compounds, without wishing to be restricted by this enumeration, include n-butyl acrylate, n-pentyl acrylate, n-hexyl acrylate, n-heptyl acrylate, n-octyl acrylate, n-nonyl acrylate, lauryl acrylate, stearyl acrylate, stearyl methacrylate, branched isomers thereof, such as 2-ethylhexyl acrylate and isooctyl acrylate, for example, and also cyclic monomers such as cyclohexyl acrylate or norbornyl acrylate and isobornyl acrylate, for example.

As an option, it is also possible to use vinyl monomers from the following groups as monomers (VI) for polymer blocks P(B): vinyl esters, vinyl ethers, vinyl halides, vinylidene halides, and also vinyl compounds which comprise aromatic cycles and heterocycles in $\alpha$ position. Here too, mention may be made, by way of example, of selected monomers which can be used in accordance with the invention: vinyl acetate, vinylformamide, vinylpyridine, ethyl vinyl ether, 2-ethylhexyl vinyl ether, butyl vinyl ether, vinyl chloride, vinylidene chloride, and acrylonitrile.

Particularly preferred examples of suitable vinyl-containing monomers (VI) for the elastomer block P(B) further include hydroxyethyl acrylate, hydroxypropyl acrylate, hydroxyethyl methacrylate, hydroxypropyl methacrylate, N-methylolacrylamide, acrylic acid, methacrylic acid, allyl alcohol, maleic anhydride, itaconic anhydride, itaconic acid, benzoin acrylate, acrylated benzophenone, acrylamide, and glycidyl methacrylate, to name but a few.

For the reversibility of the PSA, the surface tension of the individual polymer blocks is essential. Examples of the surface tensions of individual polymers are: poly-n-butyl acrylate with 28 $mJ/m^2$, polystyrene with 36 $mJ/m^2$, polymethyl acrylate with 41 $mJ/m^2$, and polymethyl methacrylate with 41 $mJ/m^2$. The monomers are selected in accordance with the surface tension of the individual monomers, these being below 45 $mJ/m^2$. (Regarding surface tension as a physical basis for the surface structure of polymer blends and block copolymers, see F. Garbassi, M. Morra, E. Occhiello, Polymer Surfaces, 1998, Wiley, New York)

Within the examples, polymers are described in which the surface tension of the polymer block P(A) is greater than that of the polymer block P(B). This is a preferred version of the invention. This invention also provides, however, a version wherein the surface tension of the polymer block P(A) is less than or equal to that of the polymer block P(B).

It is generally known of multiphase polymer systems such as polymer blends and microphase-separated block copolymers, composed in the simplest case of two types of monomer, that the phase of lower surface energy accumulates at a polymer/air interface. Given appropriate combination of the pairings of monomers used, this may lead to a complete surface occupation by one phase. In general, however, an accumulation of this phase in comparison with the composition only arises in bulk. Since the adhesive properties of a PSA depend, among other factors, on the composition at the surface and especially the dynamics of the individual phases, it is clear that differences in the softening temperature and surface energy of the individual components provide a highly effective control element for tailoring the adhesive properties and so achieving reversible redetachment from a variety of substrates.

In the context of these requirements, particular preference is given to those classes of monomer which differ by chemical modification, such as side group variation, for example, and so lead to different surface energies in the polymer. Accordingly, polyacrylates and polymethacrylates, where the surface energy is easy to control via the comonomer composition, are especially suitable.

In one preferred embodiment of the inventive reversible systems, one or more of the polymer blocks contain one or more grafted-on side chains. Systems of this kind can be obtained without restriction, both by a *graft-from* process (polymerizational attachment of a side chain starting from an existing polymer backbone) and by a *graft-to* process (attachment of polymer chains to a polymer backbone by means of polymer-analogous reactions).

For preparing block copolymers of this type it is possible in particular to use, as monomers B, monomers functionalized in such a way as to allow a *graft-from* process for the graftihg-on of side chains. Particular mention here is to be made of acrylic and methacrylic monomers which carry halogen functionalization or functionalization provided by any other functional groups which permit, for example, an ATRP (atom transfer radical polymerization) process. In this context, mention may also be made of the possibility of introducing side chains into the polymer chains in a targeted way via macromonomers. The macromonomers may for their part be constructed in accordance with the monomers B.

In one specific embodiment of this invention, the polymer blocks P(B) have had incorporated into them one or more functional groups which permit radiation-chemical crosslinking of the polymer blocks, in particular by means of UV radiation or irradiation with rapid electrons. With this objective, monomer units which can be used include, in particular, acrylic esters containing an unsaturated alkyl radical having from 3 to 18 carbon atoms and at least one carbon-carbon double bond. Suitable acrylates modified with double bonds include, with particular advantage, allyl acrylate and acrylated cinnamates. In addition to acrylic monomers it is also possible with great advantage, as monomers for the polymer block P(B), to use vinyl compounds containing double bonds which are not reactive during the (radical) polymerization of the polymer block P(B). Particularly preferred examples of such comonomers are isoprene and/or butadiene, and also chloroprene.

Starting monomers for the polymer blocks P(A) are preferably selected such that the resulting polymer blocks P(A) are immiscible with the polymer blocks P(B) and, correspondingly, microphase separation occurs. Advantageous examples of compounds used as monomers A include vinylaromatics, methyl methacrylate, cyclohexyl methacrylate, isobornyl methacrylate, and isobornyl acrylate. Particularly preferred examples are methyl methacrylate and styrene, although this enumeration makes no claim to completeness.

In addition, however, the polymer blocks P(A) may also be constructed in the form of a copolymer which can consist of at least 75% of the above monomers A, leading to a high softening temperature, or of a mixture of these monomers, but contains up to 25% of monomers B which result in a reduction in the softening temperature of the polymer block P(A) and/or further reduce the surface energy. In this sense mention may be made, by way of example but not

exclusively, of alkyl acrylates, which are defined in accordance with the structure (V) and the comments made in relation thereto.

In another favorable embodiment of the inventive PSA, polymer blocks P(A) and/or P(B) are functionalized in such a way that a thermally initiated crosslinking can be accomplished. Crosslinkers which can be chosen favorably include epoxides, aziridines, isocyanates, polycarbodiimides, and metal chelates, to name but a few.

One preferred characteristic of the block copolymers used for the PSA systems of the invention is that their molar mass $M_n$ is between about 10 000 and about 600 000 g/mol, preferably between 30 000 and 400 000 g/mol, with particular preference between 50 000 g/mol and 300 000 g/mol. The fraction of the polymer blocks P(A) is advantageously between 5 and 49 percent by weight of the overall block copolymer, preferably between 7.5 and 35 percent by weight, with particular preference between 10 and 30 percent by weight. The polydispersity of the block copolymer is preferably less than 3, being the quotient formed from the mass average $M_w$ and the number average $M_n$ of the molar mass distribution.

The ratios of the chain lengths of the block copolymers P(A) to those of the block copolymers P(B) are chosen, in a very advantageous way, such that the block copolymers P(A) are present in the form of a disperse phase ("domains") in a continuous matrix of the polymer blocks P(B). This is preferably the case at a polymer block P(A) content of less than 25% by weight. The domains may be present preferentially in a spherical or distorted spherical form. The formation of hexagonally packed cylindrical domains of the polymer blocks P(A) is likewise possible within the inventive context. Another embodiment aims at an asymmetric design of the triblock copolymers, in which the block lengths of the terminal polymer blocks P(A) in linear systems are different. The spherical morphology is particularly preferred if it is necessary to increase the internal strength of the pressure sensitive adhesive, and also for improving the mechanical properties.

In one version particularly preferred inventively, the $M_n$ molecular weight of the central block P(B) is limited to 200 000 g/mol, since as a result of the shorter polymer segments between the hard blocks P(A) these blocks move to the surface in a larger number, and hence the screen printing effect through the hard domains is particularly pronounced.

Furthermore, it may be advantageous to use blends of the abovementioned block copolymers with diblock copolymers P(A)-P(B), it being possible to use the same monomers as above to prepare the corresponding polymer blocks P(A) and P(B). Moreover, it can be of advantage to add polymers P'(A) and/or P'(B) to the PSA composed of the block copolymers, especially of triblock copolymers (I), or of a block copolymer/diblock copolymer blend in order to improve their properties.

Accordingly, the invention further provides reversible systems wherein the pressure sensitive adhesive comprises a blend of one or more block copolymers with a diblock copolymer P(A)-P(B),

- where the polymer blocks P(A) (of the individual diblock copolymers) independently of one another represent homopolymer and/or copolymer blocks of monomers A, the polymer blocks P(A) each having a softening temperature in the range from +20°C to +175°C,
- where the polymer blocks P(B) (of the individual diblock copolymers) independently of one another represent homopolymer and/or copolymer blocks of monomers B, the polymer blocks P(B) each having a softening temperature in the range from -130°C to +10°C,
- and where the (co)polymers P*(A) and P*(B) corresponding to the polymer blocks P(A) and P(B) each possess a surface tension of ≤ 45 $mJ/m^2$,

and/or containing polymers P'(A) and/or P'(B),

- where the polymers P'(A) represent homopolymers and/or copolymers of the monomers A, the polymers P'(A) each having a softening temperature in the range from +20°C to +175°C,
- where the polymers P'(B) represent homopolymers and/or copolymers of the monomers B, the polymers P'(B) each having a softening temperature in the range from -130°C to +10°C,
- where the polymers P'(A) and/or P'(B) are preferably miscible with the polymer blocks P(A) and/or P(B), respectively.
- and where the polymers P'(A) and P'(B) each possess a surface tension of ≤ 45 $mJ/m^2$.

Where both polymers P'(A) and polymers P'(B) are admixed, they are advantageously chosen such that the polymers P'(A) and P'(B) are not homogeneously miscible with one another.

As monomers for the diblock copolymers P(A)-P(B) and, respectively, the polymers P'(A) and P'(B) it is preferred to use the monomers already mentioned of groups A and B.

The diblock copolymers preferably have a molar mass $M_n$ of between 5 000 and 600 000 g/mol, more preferably between 15 000 and 400 000 g/mol, with particular preference between 30 000 and 300 000 g/mol. They advantageously possess a polydispersity $D = M_w/M_n$ of not more than 3. It is advantageous if the fraction of the polymer blocks P(A) in relation to the composition of the diblock copolymer is between 3 and 50% by weight, preferably between 5 and 35% by weight.

Advantageously, the diblock copolymers as well may have one or more grafted-on side chains.

Typical concentrations in which diblock copolymers are used in the blend are up to 250 parts by weight per 100 parts by weight of higher block copolymers containing the unit P(A)-P(B)-P(A). The polymers P'(A) and, respectively, P'(B) may be of homopolymer or else copolymer construction. In accordance with the comments made above, they are advantageously chosen so as to be compatible with the block copolymers P(A) and, respectively, P(B). The chain length of the polymers P'(A) and P'(B), respectively, is preferably chosen so that it does not exceed that of the polymer block which is preferably miscible and/or associable with it, and is advantageously 10% lower, very advantageously 20% lower, than said length. The B block may also be chosen such that its length does not exceed half of the length of the B block of the triblock copolymer.

To prepare the block copolymers of the invention it is possible in principle to use all polymerizations which proceed in accordance with a controlled or living mechanism, including combinations of different controlled polymerization techniques. Without possessing any claim to completeness, mention may be made here, by way of example, besides anionic polymerization, of ATRP, nitroxide/TEMPO-controlled polymerization, or, more preferably, the RAFT process; in other words, particularly processes which allow control over the block lengths, polymer architecture, or else, but not necessarily, the tacticity of the polymer chain.

Radical polymerizations can be conducted in the presence of an organic solvent or in the presence of water or in mixtures of organic solvents and/or organic solvents with water, or without solvent. It is preferred to use as little solvent as possible. Depending on conversion and temperature, the polymerization time for radical processes is typically between 4 and 72 h.

In the case of solution polymerization, the solvents used are preferably esters of saturated carboxylic acids (such as ethyl acetate), aliphatic hydrocarbons (such as n-hexane, n-heptane or cyclohexane), ketones (such as acetone or methyl ethyl ketone), special boiling point spirit, aromatic solvents such as toluene or xylene, or mixtures of the aforementioned solvents. For polymerization in aqueous media or in mixtures of organic and aqueous solvents, it is preferred to add emulsifiers and stabilizers for the polymerization. As polymerization initiators it is of advantage to use customary radical-forming compounds such as, for example, peroxides, azo compounds, and peroxosulfates. Initiator mixtures also possess outstanding suitability.

In an advantageous procedure, radical stabilization is effected using nitroxides of type (VIIa) or (VIIb):

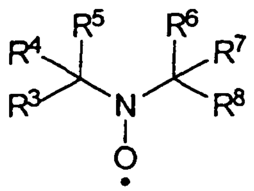

(VIIa)

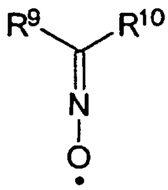

(VIIb)

where $R^3$, $R^4$, $R^5$, $R^6$, $R^7$, $R^8$, $R^9$, and $R^{10}$ are selected independently of one another and denote the following compounds or atoms:

i) halides, such as chlorine, bromine or iodine
ii) linear, branched, cyclic, and heterocyclic hydrocarbons having from 1 to 20 carbon atoms, which can be saturated, unsaturated or aromatic,
iii) esters $-COOR^{11}$, alkoxides $-OR^{12}$ and/or phosphonates $-PO(OR^{13})_2$, in which $R^{11}$, $R^{12}$, and $R^{13}$ stand for radicals from group ii).

Compounds of formula (VIIa) or (VIIb) may also be attached to polymer chains of any kind (primarily in the sense that at least one of the abovementioned radicals constitutes such a polymer chain) and can therefore be used as macroradicals or macroregulators to construct the block copolymers.

More preferred as controlled regulators for the polymerization are compounds of the following type:

- 2,2,5,5-tetramethyl-1-pyrrolidinyloxyl (PROXYL), 3-carbamoyl-PROXYL, 2,2-dimethyl-4,5-cyclohexyl-PROXYL, 3-oxo-PROXYL, 3-hydroxylimine-PROXYL, 3-aminomethyl-PROXYL, 3-methoxy-PROXYL, 3-t-butyl-PROXYL, 3,4-di-t-butyl-PROXYL

- 2,2,6,6-tetramethyl-1-piperidinyloxy (TEMPO), 4-benzoyloxy-TEMPO, 4-methoxy-TEMPO, 4-chloro-TEMPO, 4-hydroxy-TEMPO, 4-oxo-TEMPO, 4-amino-TEMPO, 2,2,6,6-tetraethyl-1-piperidinyloxyl, 2,2,6-trimethyl-6-ethyl-1-piperidinyloxyl
- N-tert-butyl 1-phenyl-2-methylpropyl nitroxide
- N-tert-butyl 1-(2-naphthyl)-2-methylpropyl nitroxide
- N-tert-butyl 1-diethylphosphono-2,2-dimethylpropyl nitroxide
- N-tert-butyl 1-dibenzylphosphono-2,2-dimethylpropyl nitroxide
- N-(1-phenyl-2-methylpropyl) 1-diethylphosphono-1-methylethyl nitroxide
- di-t-butyl nitroxide
- diphenyl nitroxide
- t-butyl t-amyl nitroxide

A series of further polymerization methods by which the pressure sensitive adhesives may alternatively be prepared can be chosen from the state of the art:
US 4,581,429 A discloses a controlled-growth radical polymerization process initiated using a compound of the formula $R^{I}R^{II}N$-O-Y in which Y is a free radical species which is able to polymerize unsaturated monomers. The reactions, however, generally have low conversions. The particular problem is the polymerization of acrylates, which proceeds only to very low yields and molar masses. WO 98/13392 A1 describes open-chain alkoxyamine compounds which have a symmetrical substitution pattern. EP 735 052 A1 discloses a process for preparing thermoplastic elastomers having narrow molar mass distributions. WO 96/24620 A1 describes a polymerization process using very specific radical compounds such as, for example, phosphorus-containing nitroxides which are based on imidazolidine. WO 98/44008 A1 discloses specific nitroxyls based on morpholines, piperazinones, and piperazinediones. DE 199 49 352 A1 describes heterocyclic alkoxyamines as regulators in controlled-growth radical polymerizations. Corresponding further developments of the alkoxyamines and/or of the corresponding free nitroxides improve the efficiency for preparing polyacrylates (Hawker, contribution to the National Meeting of the American Chemical Society, Spring 1997; Husemann, contribution to the IUPAC World Polymer Meeting 1998, Gold Coast).

As a further controlled-growth polymerization method, it is possible advantageously to use atom transfer radical polymerization (ATRP) to synthesize the block copolymers, with preferably monofunctional or difunctional secondary or tertiary halides being used as initiator and, to abstract the halide(s), complexes of Cu, Ni, Fe, Pd, Pt, Ru, Os, Rh, Co, Ir, Ag or Au (EP 0 824 111 A1; EP 826 698 A1; EP 824 110 A1; EP 841 346 A1; EP 850 957 A1). The various possibilities of ATRP are further described in the documents US 5,945,491 A, US 5,854,364 A, and US 5,789,487 A.

It is also possible with advantage to prepare the block copolymer used in accordance with the invention by means of an anionic polymerization. In this case the reaction medium used preferably comprises inert solvents, such as aliphatic and cycloaliphatic hydrocarbons, for example, or else aromatic hydrocarbons.

The living polymer is generally represented by the structure $P_L(A)$-Me, in which Me is a metal from group I of the Periodic Table, such as lithium, sodium or potassium, for example, and $P_L(A)$ is a growing polymer block made up of the monomers A. The molar mass of the polymer block being prepared is determined by the ratio of initiator concentration to monomer concentration. In order to construct the block structure, first of all the monomers A are added for the construction of a polymer block P(A), then, by adding the monomers B, a polymer block P(B) is attached, and subsequently, by again adding monomers A, a further polymer block P(A) is polymerized on, so as to form a triblock copolymer P(A)-P(B)-P(A). Alternatively, P(A)-P(B)-M can be coupled by means of a suitable difunctional compound. In this way, starblock copolymers $(P(B)\text{-}P(A))_n$ as well are obtainable. Examples of suitable polymerization initiators include n-propyllithium, n-butyllithium, sec-butyllithium, 2-naphthyllithium, cyclohexyllithium, and octyllithium, but this enumeration makes no claim to completeness. Furthermore, initiators based on samarium complexes are known for the polymerization of acrylates (Macromolecules, 1995, 28, 7886) and can be used here.

It is also possible, moreover, to use difunctional initiators, such as 1,1,4,4-tetraphenyl-1,4-dilithiobutane or 1,1,4,4-tetraphenyl-1,4-dilithioisobutane. Coinitiators may likewise be used. Suitable coinitiators include lithium halides, alkali metal alkoxides, and alkylaluminum compounds. In one very preferred version, the ligands and coinitiators are chosen so that acrylate monomers, such as n-butyl acrylate and 2-ethylhexyl acrylate, for example, can be polymerized directly and do not have to be generated in the polymer by transesterification with the corresponding alcohol.

A very preferred preparation process conducted is a variant of the RAFT polymerization (reversible addition-fragmentation chain transfer polymerization). The polymerization process is described in detail, for example, in the documents WO 98/01478 A1 and WO 99/31144 A1. Suitable with particular advantage for the preparation of triblock copolymers are trithiocarbonates of the general structure $R^{III}$-S-C(S)-S-$R^{III}$ (Macromolecules 2000, 33, 243-245), by means of which, in a first step, monomers for the end blocks P(A) are polymerized. Then, in a second step, the middle block P(B) is synthesized. Following the polymerization of the end blocks P(A), the reaction can be terminated and reinitiated. It is also possible to carry out polymerization sequentially without interrupting the reaction. In one very advantageous variant, for example, the trithiocarbonates (VIII) and (IX) or the thiocompounds (X) and (XI) and are used

for the polymerization, it being possible for ϕ to be a phenyl ring, which can be unfunctionalized or functionalized by alkyl or aryl substituents attached directly or via ester or ether bridges, or to be a cyano group, or to be a saturated or unsaturated aliphatic radical. The phenyl ring ϕ may optionally carry one or more polymer blocks, examples being polybutadiene, polyisoprene, polychloroprene or poly(meth)acrylate, which can be constructed in accordance with the definition of P(A) or P(B), or polystyrene, to name but a few. Functionalizations may, for example, be halogens, hydroxyl groups, epoxide groups, groups containing nitrogen or sulfur, with this list making no claim to completeness.

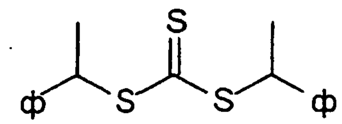

(VIII)

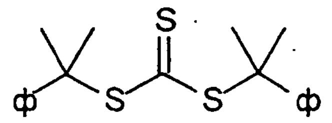

(IX)

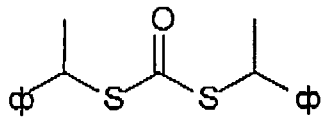

(X)

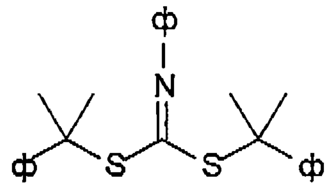

(XI)

It is also possible to employ thioesters of the general structure $R^{IV}$-C(S)-S-$R^{V}$, especially in order to prepare asymmetric systems. $R^{IV}$ and $R^{V}$ can be selected independently of one another, and $R^{IV}$ can be a radical from one of the following groups i) to iv) and $R^{V}$ a radical from one of the following groups i) to iii):

i) $C_1$ to $C_{18}$ alkyl, $C_2$ to $C_{18}$ alkenyl, $C_2$ to $C_{18}$ alkynyl, each linear or branched; aryl-, phenyl-, benzyl-, aliphatic and aromatic heterocycles.

ii) $-NH_2$, -NH-$R^{VI}$, -$NR^{VI}R^{VII}$, -NH-C(O)-$R^{VI}$, -$NR^{VI}$-C(O)-$R^{VII}$, -NH-C(S)-$R^{VI}$, -$NR^{VI}$-C(S)-$R^{VII}$,

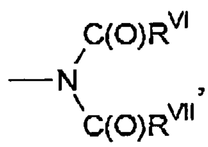 , 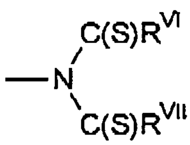 , 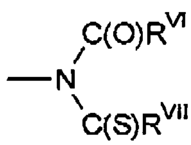

with $R^{VI}$ and $R^{VII}$ being radicals selected independently of one another from group i).

iii) -S-$R^{VIII}$, -S-C(S)-$R^{VIII}$, with $R^{VIII}$ being able to be a radical from one of groups i) or ii).

iv) -O-$R^{VIII}$, -O-C(O)-$R^{VIII}$, with $R^{VIII}$ being able to be a radical chosen from one of the groups i) or ii).

In connection with the abovementioned polymerizations which proceed by controlled-growth radical mechanisms, it is preferred to use initiator systems which further comprise additional radical initiators for the polymerization, especially thermally decomposing radical-forming azo or peroxo initiators. In principle, however, all customary initiators known for acrylates are suitable for this purpose. The production of C-centered radicals is described in Houben-Weyl, Methoden der Organischen Chemie, Vol. E19a, p. 60 ff. These methods are employed preferentially. Examples of radical sources are peroxides, hydroperoxides, and azocompounds. A few nonexclusive examples of typical radical initiators that may be mentioned here include potassium peroxodisulfate, dibenzoyl peroxide, cumene hydroperoxide, cyclohexanone peroxide, cyclohexylsulfonyl acetyl peroxide, di-tert-butyl peroxide, azodiisobutyronitrile, diisopropyl percarbonate, tert-butyl peroctoate, and benzpinacol. In one very preferred variant, the radical initiator used is 1,1'-azobis (cyclohexylnitrile) (Vazo 88®, DuPont®) or 2,2-azobis(2-methylbutanenitrile) (Vazo 67®, DuPont®). Furthermore, it is

also possible to use radical sources which release radicals only under UV irradiation.

In the conventional RAFT process, polymerization is generally carried out only to low conversions (WO 98/01478 A1), in order to obtain very narrow molecular weight distributions. Because of the low conversions, however, these polymers cannot be used as pressure sensitive adhesives and particularly not as hotmelt pressure sensitive adhesives, since the high residual monomer fraction adversely affects the technical adhesive properties, the residual monomers contaminate the solvent recyclate in the concentration process, and the corresponding self-adhesive tapes will exhibit very high outgassing. In accordance with the invention, the solvent is stripped off preferably in a concentrating extruder under reduced pressure, it being possible to use, for example, single-screw or twin-screw extruders for this purpose, which preferentially distill off the solvent in different or the same vacuum stages and which possess a feed preheater.

For advantageous inventive further development, tackifier resins may be admixed to the block copolymer pressure sensitive adhesives. In principle, it is possible to use all resins soluble in the corresponding polyacrylate middle block P(B). Suitable tackifier resins include rosin and rosin derivatives (rosin esters, including rosin derivatives stabilized by, for example, disproportionation or hydrogenation), polyterpene resins, terpene-phenolic resins, alkylphenol resins, and aliphatic, aromatic and aliphatic-aromatic hydrocarbon resins, to name but a few. Primarily, the resins chosen are those which are compatible preferentially with the elastomer block. The weight fraction of the resins in the block copolymer is typically up to 40% by weight, more preferably up to 30% by weight.

For one specific embodiment of the invention resins compatible with the polymer block P(A) can be used as well.

It is also possible, optionally, to add plasticizers, fillers (e.g., fibers, carbon black, zinc oxide, titanium dioxide, chalk, solid or hollow glass beads, microbeads of other materials, silica, silicates), nucleators, expandants, compounding agents and/or aging inhibitors, in the form of primary and secondary antioxidants or in the form of light stabilizers, for example.

The internal strength (cohesion) of the pressure sensitive adhesive is preferably produced by physical crosslinking of the polymer blocks P(A). The resulting physical crosslinking is typically thermoreversible. For irreversible crosslinking, the adhesives may additionally be crosslinked chemically. For this purpose, the acrylic block copolymer pressure sensitive adhesives used for the reversible systems of the invention can optionally comprise compatible crosslinking substances. Examples of suitable crosslinkers include metal chelates, polyfunctional isocyanates, polyfunctional amines, and polyfunctional alcohols. Additionally, polyfunctional acrylates can be used with advantage as crosslinkers for actinic irradiation.

For the optional crosslinking with UV light, UV-absorbing photoinitiators are added to the polyacrylate-containing block copolymers employed in the systems of the invention. Useful photoinitiators which can be used to great effect are benzoin ethers, such as benzoin methyl ether and benzoin isopropyl ether, for example, substituted acetophenones, such as 2,2-diethoxyacetophenone (available as Irgacure 651® from Ciba Geigy®), 2,2-dimethoxy-2-phenyl-1-phenylethanone, dimethoxyhydroxyacetophenone, substituted $\alpha$-ketols, such as 2-methoxy-2-hydroxypropiophenone, aromatic sulfonyl chlorides, such as 2-naphthylsulfonyl chloride, and photoactive oximes, such as 1-phenyl-1,2-propanedione 2-(O-ethoxycarbonyl) oxime.

The abovementioned photoinitiators and others which can be used, including those of the Norrish I or Norrish II type, can contain the following radicals: benzophenone, acetophenone, benzil, benzoin, hydroxyalkylphenone, phenyl cyclohexyl ketone, anthraquinone, trimethylbenzoylphosphine oxide, methylthiophenyl morpholinyl ketone, amino ketone, azobenzoin, thioxanthone, hexaarylbisimidazole, triazine or fluorenone, it being possible for each of these radicals to be further substituted by one or more halogen atoms and/or one or more alkyloxy groups and/or one or more amino groups or hydroxyl groups. A representative overview is given by Fouassier: "Photoinitiation, Photopolymerization and Photocuring: Fundamentals and Applications", Hanser-Verlag, Munich 1995. For further details, consult Carroy et al. in "Chemistry and Technology of UV and EB Formulation for Coatings, Inks and Paints", Oldring (ed.), 1994, SITA, London.

In principle it is also possible to crosslink the pressure sensitive adhesives used in accordance with the invention using electron beams. Typical irradiation devices which may be employed are linear cathode systems, scanner systems, and segmented cathode systems, in the case of electron beam accelerators. A detailed description of the state of the art, and the most important process parameters, can be found in Skelhorne, Electron Beam Processing, in Chemistry and Technology of UV and EB Formulation for Coatings, Inks and Paints, Vol. 1, 1991, SITA, London. The typical acceleration voltages are situated within the range between 50 kV and 500 kV, preferably between 80 kV and 300 kV. The scatter doses used range between 5 to 150 kGy, in particular between 20 and 100 kGy.

**Self-adhesive tapes (product constructions)**

The reversible systems may be constructed in particular as follows:

a] single-layer adhesive sheets composed of a pressure sensitive adhesive layer comprising one or more acrylic block copolymers as base polymer(s).

b] multilayer adhesive sheets which use a layer based on acrylic block copolymers as their pressure sensitive adhesive layer, on one or both sides.

a) Single-layer constructions

Because of the high cohesion of the acrylic block copolymers, acrylic block copolymer self-adhesive strips or sheets can be produced from a single layer a (Fig. 1) with a thickness of up to several millimeters. Owing to the intrinsic UV stability, such self-adhesive strips/sheets require very small amounts, if any, of light stabilizers. Water-clear-transparent embodiments of high light stability are therefore easy to obtain.

b) Multilayer constructions

Furthermore, based on the reversible systems of the invention comprising acrylic block copolymers, it is possible to use multilayer self-adhesive strips/sheets, examples being two-layer, three-layer or else multilayer systems (see Fig. 2: three-layer construction; Fig. 3: two-layer construction).

The reversible systems of the invention are likewise usable in the form of multilayer constructions comprising layers containing none of the acrylic block copolymers as described above. Three-layer self-adhesive tapes of this kind, for example, comprise a middle layer b and two outer layers a and a' (Fig. 2). Layer b can contain, for example, elastomers such as natural rubber, synthetic polyisoprene, polybutadiene or thermoplastic elastomers such as styrene block copolymers (e.g., styrene-isoprene-styrene, styrene-butadiene-styrene or their hydrogenated analogs styrene-ethylene/propylene-styrene and styrene-ethylene/butylene-styrene) or the PMMA-containing polymers that are analogous to the aforementioned styrene block copolymers, namely poly(MMA-isoprene-MMA), poly(MMA-butadiene-MMA), poly(MMA-ethylene/propylene-MMA), and poly(MMA-ethylene/butylene-MMA), in straight form or in the form of a blend with resins and/or other additives. Furthermore, the middle layer b may also comprise backing films, foams, nonwovens, papers, metal foils, and further backing materials commonly used in the production of pressure sensitive adhesives.

The outer layers a and a' are composed of acrylic block copolymer pressure sensitive adhesives, as described above, and may be identical or different in construction. Acrylic block copolymer outer layers can have identical or different thicknesses and are typically at least 10 μm thick, more preferably at least 25 μm thick.

Reversible systems in the form of two-layer systems consist of two layers, a and b (Fig. 3).

Layer b can be constructed, for example, from elastomers such as natural rubber or thermoplastic elastomers such as acrylic block copolymers or styrene block copolymers with polydiene middle blocks in straight form or in the form of a blend with resins and/or other additives. Layer b is characterized in particular by a thickness of at least 10 μm, preferably by a thickness of not less than 25 μm, more preferably by a thickness of not less than 100 μm.

The top layer a is composed of acrylic block copolymer pressure sensitive adhesives, as described above. The top layer typically has a thickness of not less than 10 μm, more preferably not less than 25 μm.

The invention further provides for the use of pressure sensitively adhesive systems which comprise at least one pressure sensitive adhesive based on at least one block copolymer, at least one block copolymer being composed at least in part on the basis of (meth)acrylic acid derivatives, additionally at least one block copolymer comprising at least the unit P(A)-P(B)-P(A) composed of at least one polymer block P(B) and at least two polymer blocks P(A), where

- P(A) independently of one another represent homopolymer and/or copolymer blocks of monomers A, the polymer blocks P(A) each having a softening temperature in the range from + 20°C to + 175°C,
- P(B) represents a homopolymer or copolymer block of monomers B, the polymer block P(B) having a softening temperature in the range from -130°C to +10°C,
- the polymer blocks P(A) and P(B) are not homogeneously miscible with one another, and
- the (co)polymers P*(A) and P*(B) corresponding to the polymer blocks P(A) and P(B) each possessing a surface tension of ≤ 45 mJ/$m^2$,

for reversible bonds, especially for bonds on paper. The adhesive tape can be redetached without residue from the substrate, without damaging said substrate and without leaving residues of adhesive on said substrate.

Very advantageously, use is made here of the pressure sensitive adhesive from claim 1 or from one of the subclaims.

**Examples**

**Test methods**

**A. Bond strength**

The testing of the peel adhesion (bond strength) was carried out in accordance with PSTC-1. A 100 μm thick pressure sensitive layer is applied to a 25 μm thick PET sheet. A strip of this sample, 2 cm wide, is bonded to a PE plate

covered with graphics paper (ROTOKOP copier paper, 80 $g/m^2$) by rolling back and forth over it three times using a 2 kg roller. The plate is clamped in and the self-adhesive strip is pulled off from its free end at a peel angle of 180° and a speed of 300 mm/min on a tensile testing machine.

**B. Bond strength - peel increase**

The testing of the peel adhesion (bond strength) was carried out in accordance with PSTC-1. A 100 μm thick pressure sensitive layer is applied to a 25 μm thick PET sheet. A strip of this sample, 2 cm wide, is bonded to a PE plate covered with graphics paper (ROTOKOP copier paper, 80 $g/m^2$) by rolling back and forth over it three times using a 2 kg roller. After 72 hours of bonding, the plate is clamped in and the self-adhesive strip is pulled off from its free end at a peel angle of 180° and a speed of 300 mm/min on a tensile testing machine.

**C. Reversibility**

A 100 μm thick pressure sensitive adhesive layer is applied to a 25 μm thick PET sheet. A strip of this sample, 2 cm wide, is folded over on itself with a length of 15 cm and is bonded by rolling back and forth over it three times using a 2 kg roller. Immediately thereafter, the bond areas are separated from one another by hand, the reversibility of the individual specimens being assessed by the choice of pulling speed. The test is passed if the films of pressure sensitive adhesive can be separated from one another without damage and without great force being expended.

**D. Gel permeation chromatograpy (GPC)**

The average molecular weight $M_w$ and the polydispersity PD were determined by means of gel permeation chromatography. The eluent used was THF containing 0.1% by volume trifluoroacetic acid. Measurement was carried out at 25°C. The precolumn used was PSS-SDV, 5 μ, $10^3$ Å, ID 8.0 mm x 50 mm. Separation was carried out using the columns PSS-SDV, 5 μ, $10^3$ and also $10^5$ and $10^6$ each with ID 8.0 mm x 300 mm. The sample concentration was 4 g/l, the flow rate 1.0 ml per minute. Measurement was made against polystyrene standards.

**E. Atomic force microscopy (AFM)**

The AFM measurements were carried out using the scanning force microscope Explorer from Topometrix. The scan range is 100 μm laterally and 10 μm in the z direction. The measurements were conducted in pulse force mode (see D. Sarid, Scanning Force Microscopy, in Oxford Series on Optical Science, M. Lapp, H. Stark, eds., Oxford University Press 1991). The storage oscilloscope is from Tektronix, the FMR50 Cantilever from Nanosensors ($1\ N\ m^{-1} < k_{lever} < 5\ N\ m^{-1}$).

**Test specimen production**

*Preparation of a RAFT regulator:*

The regulator bis-2,2'-phenylethyl trithiocarbonate (formula VIII) was prepared starting from 2-phenylethyl bromide using carbon disulfide and sodium hydroxide in accordance with instructions in Synth. Comm., 1988, 18 (13), 1531. Yield: 72%. $^1$H-NMR ($CDCl_3$), δ: 7.20-7.40 ppm (m, 10 H); 3.81 ppm (m, 1 H); 3.71 ppm (m, 1 H); 1.59 ppm (d, 3 H); 1.53 ppm (d, 3 H).

*Preparation of polystyrene (PS):*

A 2 L reactor conventional for free-radical polymerization is charged under nitrogen with 362 g of styrene and 3.64 g of bis-2,2'-phenylethyltrithiocarbonate regulator. This initial charge is heated to an internal temperature of 110°C and initiated with 0.15 g of Vazo 67® (DuPont). After a reaction time of 10 hours, 100 g of toluene are added. After a reaaction time of 24 hours, initiation is carried out with a further 0.1 g of Vazo 67® and polymerization is continued for 24 hours. In the course of the polymerization there is a marked rise in the viscosity. To compensate this, 150 g of toluene are added for final dilution after 48 hours.
For purification, the polymer was precipitated from 4.5 liters of methanol, filtered on a frit, and then dried in a vacuum drying oven.
Gel permeation chromatography (test D) against polystyrene standards gave an $M_n$ = 29 300 g/mol and $M_w$ = 35 500 g/mol.

Example 1:

In a second step 48.5 g of polystyrene PS are mixed in a reactor conventional for free-radical polymerizations with 64 g of stearyl methacrylate, 256 g of 2-ethylhexyl acrylate and 100 g of acetone. After the mixture has been rendered inert under nitrogen gas for half an hour, it is heated to an internal temperature of 60°C and initiated with 0.1g Vazo 67® (DuPont) in solution in 5 g of acetone. After a reaction time of 4 hours, initiation is carried out with a further 0.1 g of Vazo 67® in solution in 10 g of acetone. After a reaction time of 10 hours, dilution is carried out with 150 g of acetone. After a reaction time of 28 hours, the polymerization is terminated by cooling and the product is diluted down to 30% by adding special boiling point spirit 60/95.

Gel permeation chromatography (test D) against polystyrene standards gave $M_n$ = 99 700 g/mol and $M_w$ = 208 000 g/mol.

For technical adhesive testing, the polymer was applied from solution to a primed PET sheet 25 μm thick and then dried at 120°C for 10 minutes. After drying, the application rate was 100 g/$m^2$.

For technical adhesive testing, test methods A, B, and C were carried out.

Example 2:

In a second step 48.5 g of polystyrene PS are mixed in a reactor conventional for free-radical polymerizations with 64 g of stearyl methacrylate, 256 g of n-butyl acrylate and 100 g of acetone. After the mixture has been rendered inert under nitrogen gas for half an hour, it is heated to an internal temperature of 60°C and initiated with 0.1g Vazo 67® (DuPont) in solution in 5 g of acetone. After a reaction time of 4 hours, initiation is carried out with a further 0.1 g of Vazo 67® in solution in 10 g of acetone. After a reaction time of 10 hours, dilution is carried out with 150 g of acetone. After a reaction time of 28 hours, the polymerization is terminated by cooling and the product is diluted down to 30% by adding special boiling point spirit 60/95.

Gel permeation chromatography (test D) against polystyrene standards gave $M_n$ = 131 000 g/mol and $M_w$ = 279 000 g/mol.

For technical adhesive testing, the polymer was applied from solution to a primed PET sheet 25 μm thick and then dried at 120°C for 10 minutes. After drying, the application rate was 100 g/$m^2$.

For technical adhesive testing, test methods A, B, and C were carried out.

Example 3:

In a second step 48.5 g of polystyrene PS are mixed in a reactor conventional for free-radical polymerizations with 96 g of stearyl acrylate, 222.4 g of 2-ethylhexyl acrylate, 1.6 g of acrylic acid and 100 g of acetone/special boiling point spirit 60/95 (1:1). After the mixture has been rendered inert under nitrogen gas for half an hour, it is heated to an internal temperature of 60°C and initiated with 0.15g Vazo 67® (DuPont) in solution in 5 g of acetone. After a reaction time of 1.5 hours, initiation is carried out with a further 0.15 g of Vazo 67® in solution in 5 g of acetone. After a reaction time of 3 hours, 4.75 hours, 6 hours, and 6.5 hours, dilution is carried out in each case with 50 g of acetone. After a reaction time of 24 hours, the polymerization is terminated by cooling and the product is diluted down to 30% by adding special boiling point spirit 60/95.

Gel permeation chromatography (test D) against polystyrene standards gave $M_n$ = 108 000 g/mol and $M_w$ = 223 000 g/mol.

For technical adhesive testing, the polymer was applied from solution to a primed PET sheet 25 μm thick and then dried at 120°C for 10 minutes. After drying, the application rate was 100 g/$m^2$.

For technical adhesive testing, test methods A, B, and C were carried out.

Example 4:

In a second step 59 g of polystyrene PS are mixed in a reactor conventional for free-radical polymerizations with 94.1 g of stearyl acrylate, 174.7 g of 2-ethylhexyl acrylate and 100 g of acetone/special boiling point spirit 60/95 (1:1). After the mixture has been rendered inert under nitrogen gas for half an hour, it is heated to an internal temperature of 60°C and initiated with 0.15g Vazo 67® (DuPont) in solution in 5 g of acetone. After a reaction time of 1.5 hours, initiation is carried out with a further 0.15 g of Vazo 67® in solution in 5 g of acetone. Dilution is carried out after 3.5 hours with 50 g of acetone/special boiling point spirit 60/95 (1:1), after 4.5 hours with 50 g of acetone, after 6.5 hours with 70 g of acetone/special boiling point spirit 60/95 (1:1), and after 7.5 hours with 50 g of acetone. After a reaction time of 24 hours, the polymerization is terminated by cooling and the product is diluted down to 30% by adding special boiling point spirit 60/95.

Gel permeation chromatography (test D) against polystyrene standards gave $M_n$ = 112 000 g/mol and $M_w$ = 237 000 g/mol.

For technical adhesive testing, the polymer was applied from solution to a primed PET sheet 25 μm thick and then dried

at 120°C for 10 minutes. After drying, the application rate was 100 g/m$^2$.
For technical adhesive testing, test methods A, B, C, and E were carried out.

Example 5:

In a second step 84 g of polystyrene PS are mixed in a reactor conventional for free-radical polymerizations with 93 g of stearyl acrylate, 173 g of 2-ethylhexyl acrylate and 100 g of acetone/special boiling point spirit 60/95 (1:1). After the mixture has been rendered inert under nitrogen gas for half an hour, it is heated to an internal temperature of 60°C and initiated with 0.15g Vazo 67® (DuPont) in solution in 5 g of acetone. After a reaction time of 1.5 hours, initiation is carried out with a further 0.15 g of Vazo 67® in solution in 5 g of acetone. After a reaction time of 4 hours, initiation is carried out with a further 0.15 g of Vazo 67® in solution in 5 g of acetone. After a reaction time of 5 hours, initiation is carried out with a further 0.2 g of Vazo 67® in solution in 5 g of acetone. Dilution is carried out after 7 and 8 hours with in each case 100 g of acetone/special boiling point spirit 60/95 (1:1). After a reaction time of 30 hours, the polymerization is terminated by cooling and the product is diluted down to 30% by adding special boiling point spirit 60/95.
Gel permeation chromatography (test D) against polystyrene standards gave $M_n$ = 87 000 g/mol and $M_w$ = 166 000 g/mol.
For technical adhesive testing, the polymer was applied from solution to a primed PET sheet 25 μm thick and then dried at 120°C for 10 minutes. After drying, the application rate was 100 g/m$^2$.
For technical adhesive testing, test methods A, B, C, and E were carried out.

Example 6:

A 2 L reactor conventional for free-radical polymerization is charged under nitrogen with 40 g of acrylic acid, 40 g of 2-ethylhexyl acrylate, 1.2 g of bis-2,2'-phehylethyltrithiocarbonate regulator and 80 g of acetone. This initial charge is heated to an internal temperature of 60°C and is initiated with 0.2 g of Vazo 67® (DuPont) in solution in 5 g of acetone. After a reaction time of 1.5 hours initiation is repeated with 0.2 g of Vazo 67® (DuPont) in solution in 5 g of acetone. After a reaction time of 5 and 7 hours dilution is carried out in each case with 50 g of acetone.
After 24 hours of reaction a sample is taken.
Gel permeation chromatography (test D) against polystyrene standards gave $M_n$ = 30 100 g/mol and $M_w$ = 35 300 g/mol.
The polymerization is continued in the same reactor after a reaction time of 24 hours. 320 g of 2-ethylhexyl acrylate, 80 g of acetone and 20 g of isopropanol are added to the polymer. After a reaction time of 24.75 hours initiation is repeated with 0.2 g of Vazo 67® (DuPont) in solution in 5 g of acetone. After 28.5 and 32 hours dilution is carried out in each case with 50 g of acetone. After 48 hours initiation is repeated in 0.2 g of Vazo 67® (DuPont) in solution in 5 g of acetone. After 55.5 hours, 20 g of acetone are added and after 72 hours the reaction is terminated by cooling to room temperature.
Gel permeation chromatography (test D) against polystyrene standards gave $M_n$ = 41 900 g/mol and $M_w$ = 77 400 g/mol.
For technical adhesive testing, the polymer was applied from solution to a primed PET sheet 25 μm thick and then dried at 120°C for 10 minutes. After drying, the application rate was 100 g/m$^2$.
For technical adhesive testing, test methods A, B, and C were carried out.

**Results**

As examples, the compositions of the individual polymers are given again for clarity, summarized in Table 1:

Table 1:

| Example | Materials | | |
|---|---|---|---|
| 1 | [PS]-[P80%-EHA-co-20%SMA]-[PS] | | |
| | 6.5% | 87% | 6.5% |
| 2 | [PS]-[P80%-BA-co-20%SMA]-[PS] | | |
| | 6.5% | 87% | 6.5% |
| 3 | [PS]-[P69.5%-EHA-co-30%SA-co-0.5%AS]-[PS] | | |
| | 6.5% | 87% | 6.5% |
| 4 | [PS]-[P65%-EHA-co-35%SA]-[PS] | | |
| | 9% | 82% | 9% |
| 5 | [PS]-[P65%-EHA-co-35%SA]-[PS] | | |
| | 12% | 76% | 12% |

(continued)

| Example | Materials |
|---|---|
| 6 | [P50%-EHA-co-50%AS]-[PEHA]-[P50%-EHA-co-50%AS]<br>10% 80% 10% |
| PS = polystyrene<br>[] = polymer block<br>EHA = 2-ethylhexyl acrylate<br>SMA = stearyl methacrylate<br>BA = n-butyl acrylate<br>SA = stearyl acrylate<br>AS = acrylic acid<br>% = percent by weight | |

The figures indicated in Table 1 in each case below of the polymer composition relate to the weight-percentage composition of the individual polymer blocks. In Examples 1 to 5 polystyrene is always in the form of a homopolymer end block. Only its percentage fraction in the overall polymer has been varied. In Examples 1 to 3, the composition of the middle block was varied. Both variations, by changing the surface tension of the individual polymers, by the different molecular weights and the different extent of formation of hard block domains, lead to different technical adhesive properties.

In Example 6, the polystyrene end blocks were substituted by a copolymer of 50% acrylic acid and 50% 2-ethylhexyl acrylate. The middle block was composed of straight poly-2-ethylhexyl acrylate.

First of all, the technical adhesive properties of these block copolymers were measured.

The results are shown in Table 2 below.

Table 2:

| Example | BS on paper, immediate [N/cm] | BS on paper after 72 h [N/cm] | Reversibility from itself* |
|---|---|---|---|
| 1 | 3.7 | 4.3 | very good |
| 2 | 4.2 | 4.6 | very good |
| 3 | 3.4 | 3.2 | good |
| 4 | 1.7 | 1.6 | very good |
| 5 | 0.5 | 0.2 | very good |
| 6 | 0.6 | 0.6 | good |
| BS = bond strength in N/cm<br>*All specimens pass the reversibility test. "very good" and "good" denote the subjective perception by the testing operative of the force required to separate the adhesive strips from one another | | | |

The data listed in Table 2 illustrate that the polymers can be used as very reversible pressure sensitive adhesives. The test of reversibility from the adhesive itself imposes very stringent requirements on the PSA and is clearly passed by Examples 1 to 6. If a PSA passes this test, then it is also reversibly detachable from substrates such as steel, polyethylene, polystyrene, polymethyl methacrylate, polycarbonate, and many other plastics and other materials. The particular feature of these examples is that the PSAs used in the PSA systems of the invention were not additionally crosslinked over their full area and were coated without a structuring procedure before or after. Moreover, the chosen application rate of 100 g/m$^2$ is very high for reversible compositions.

Another difficult test for reversible PSAs is that of bonding to paper, since in this case tearing is observed very often when PSA tapes are removed. Therefore, Examples 1 to 6 were likewise bonded to conventional graphics paper and the bond strength to this substrate was measured. All 6 examples showed no tearing at a defined removal speed of 300 mm/min. Moreover, the bond strengths illustrate the fact that, through the choice of the polymer blocks and their composition and weight-percentage composition of the overall system, it is possible to control bond strengths on paper. Since bonds are generally performed for a prolonged period, the peel increase at room temperature was assessed as well. In this test, the PSAs were bonded for 72 hours under standard conditions (23°C, 50% humidity) and then the bond strength was determined on the same graphics paper. Comparison with the fresh figures shows that the reversible polymers of the invention likewise exhibit only a very low peel increase, since there is no or virtually no rise in the bond

strengths over time. In this test, moreover, again no paper tearing was found.
In order to shed light on this behavior, AFM micrographs were prepared of two selected examples. The AFM method is explained in test E and the literature cited there. The method scans the surface of the PSA with a cantilever and, by way of force required to press the tip of the cantilever into the adhesive and withdraw it again, it differentiates between hard and soft domains. Examples 4 and 5 were subjected to such testing, and the images obtained are shown in Figures 4 and 5.

Figures 4 and 5 illustrate the surface structure of the polymers of the invention. The light regions shown represent the hard blocks, the dark segments the soft blocks. The polymers are shown in topographic mode. Both AFM pictures reveal that a microphase-separated system is formed. A kind of "screen printing effect" arises through the hard domains. As a result of the self-organization, the "screen print" comes about of itself. The size of the hard domains can be controlled by the weight fraction of the hard block polymer. The domains pictured possess a diameter of about 10 to 20 nm. Achieving such nanostructuring with technical means is extremely complicated. Consequently, this process possesses clear advantages over the processes recounted in the prior art. Moreover, the reversibility of the hard block domains can be increased further still by lowering the surface tension.

The PSA systems of the invention are notable for PSAs with intrinsic reversibility (cf. test C). Effectively pressure sensitively adhering domains are formed alongside domains of little or no tack. Two PSAs can be bonded on the adhesive side and then parted again without further damage. This reversibility results preferentially through a self-organized microphase separation of the PSA based on the block copolymer. Removal of the PSA from the substrate takes place without residue and without destroying the substrate - paper, for example.

## Claims

1. The use of pressure sensitively adhesive systems which comprise at least one pressure sensitive adhesive based on at least one block copolymer, at least one block copolymer comprising at least the unit P(A)-P(B)-P(A) composed of at least one polymer block P(B) and at least two polymer blocks P(A), where

   - P(A) independently of one another represent homopolymer and/or copolymer blocks of monomers A, the polymer blocks P(A) each having a softening temperature in the range from + 20°C to + 175°C,
   - P(B) represents a homopolymer or copolymer block of monomers B, the polymer block P(B) having a softening temperature in the range from -130°C to +10°C
   - P(B) being composed on the basis of (moth)acrylic acid derivatives,
   - the polymer blocks P(A) and P(B) are not homogeneously miscible with one another, and
   - the (co)polymers P*(A) and P*(B) corresponding to the polymer blocks P(A) and P(B) each possessing a surface tension of $\leq$ 45 $mJ/m^2$,

   for reversible bonds.

2. The use as claimed in claim 1 for bonds on paper.

3. The use as claimed in at least one of claims 1 and 2, wherein
   the construction of at least one block copolymer can be described by one or more of the following general formulae:

$$P(A)\text{-}P(B)\text{-}P(A) \qquad (I)$$

$$P(B)\text{-}P(A)\text{-}P(B)\text{-}P(A)\text{-}P(B) \qquad (II)$$

$$[P(B)\text{-}P(A)]_nX \qquad (III)$$

$$[P(B)\text{-}P(A)]_nX[P(A)]_m \qquad (IV),$$

   - where n = 3 to 12, m = 3 to 12, and X is a polyfunctional branching unit, i.e., a chemical building block via which different polymer arms are linked to one another,
   - where the polymer blocks P(A) independently of one another represent homopolymer and/or copolymer blocks

of the monomers A, the polymer blocks P(A) each having a softening temperature in the range from +20°C to +175°C,
- where the polymer blocks P(B) independently of one another represent homopolymer and/or copolymer blocks of the monomers B, the polymer blocks P(B) each having a softening temperature in the range from -130°C to +10°C,
- and where the (co)polymers P*(A) and P*(B) corresponding to the polymer blocks P(A) and P(B) each possess a surface tension of ≤ 45 mJ/$m^2$.

**4.** The use as claimed in at least one of the preceding claims, wherein
at least one block copolymer has a symmetrical structure such that there are polymer blocks P(A) identical in chain length and/or chemical structure and/or that there are polymer blocks P(B) identical in chain length and/or chemical structure.

**5.** The use as claimed in at least one of the preceding claims wherein
at least one block copolymer has one or more of the following criteria:

- a molar mass $M_n$ of between 10 000 and 600 000 g/mol,
- a polydispersity D = $M_w/M_n$ of not more than 3,
- a polymer block P(A) fraction of between 5 and 49% by weight, based on the triblock copolymer composition,
- one or more grafted-on side chains.

**6.** The use as claimed in at least one of the preceding claims, wherein
the ratio of the chain lengths of the polymer blocks P(A) to those of the polymer blocks P(B) is chosen such that the polymer blocks P(A) are present as a disperse phase ("domains") in a continuous matrix of the polymer blocks P (B), especially in the form of spherical domains or distorted spherical domains or cylindrical domains.

**7.** The use as claimed in at least one of the preceding claims, wherein
the pressure sensitive adhesive constitutes a polymer blend of one or more block copolymers In accordance with the above claims with at least one diblock copolymer P(A)-P(B),

- where the polymer blocks P(A) (of the individual diblock copolymers) independently of one another represent homopolymer and/or copolymer blocks of monomers A, the polymer blocks P(A) each having a softening temperature in the range from +20°C to +175°C,
- where the polymer blocks P(B) (of the individual diblock copolymers) independently of one another represent homopolymer and/or copolymer blocks of monomers B, the polymer blocks P(B) each having a softening temperature in the range from -130°C to +10°C,
- and where the (co) polymers P* (A) and P* (B) corresponding to the polymer blocks P (A) and P (B) each possess a surface tension of ≤ 45 mJ/$m^2$,

and/or containing polymers P'(A) and/or P'(B),

- where the polymers P'(A) represent homopolymers and/or copolymers of the monomers A, the polymers P' (A) each having a softening temperature in the range from +20°C to +175°C,
- where the polymers P'(B) represent homopolymers and/or copolymers of the monomers B, the polymers P' (B) each having a softening temperature in the range from -130°C to +10°C,
- wherein the polymers P'(A) and/or P'(B) are preferably miscible with the polymer blocks P(A) and/or P(B), respectively.
- and where the polymers P'(A) and P'(B) each possess a surface tension of ≤ 45 mJ/$m^2$.

**8.** The use as claimed in at least one of the preceding claims wherein
at least one diblock copolymer has one or more of the following criteria:

- a molar mass $M_n$ of between 5000 and 600 000 g/mol,
- a polydispersity D = $M_w/M_n$ of not more than 3,
- a polymer block P(A) fraction of between 3 and 50% by weight, based on the diblock copolymer composition,
- one or more grafted-on side chains.

**9.** The use as claimed in at least one of the preceding claims, wherein

as monomers B for the polymer blocks P(B) and/or for the polymers P'(B) compounds from the following groups are chosen:

- from 75 to 100% by weight of acrylic and/or methacrylic acid derivatives of the general structure (VI)

$$CH_2=CH(R^1)(COOR^2) \qquad (VI)$$

where $R^1$ = H or $CH_3$ and $R^2$ = H or linear, branched or cyclic, saturated or unsaturated alkyl radicals having from 1 to 30 carbon atoms,
- from 0 to 25% by weight of vinyl compounds which contain functional groups.

**10.** The use as claimed in at least one of the preceding claims, wherein
the pressure sensitive adhesive is admixed with tackifier resins, especially those compatible with the polymer blocks P(B), and/or wherein the pressure sensitive adhesive is admixed with plasticizers, fillers, nucleators, expandants, compounding agents and/or aging inhibitors.

**Patentansprüche**

**1.** Verwendung von haftklebrigen Systemen, welche mindestens eine Haftklebemasse auf Basis von zumindest einem Blockcopolymer enthalten, wobei weiterhin zumindest ein Blockcopolymer mindestens die Einheit P(A)-P(B)-P(A) aus wenigstens einem Polymerblock P(B) und wenigstens zwei Polymerblöcken P(A) aufweist und wobei

- P(A) unabhängig voneinander Homo- und/oder Copolymerblöcke aus Monomeren A repräsentieren, wobei die Polymerblöcke P(A) jeweils eine Erweichungstemperatur im Bereich von + 20 °C bis + 175 °C aufweisen,
- P(B) einen Homo- oder Copolymerblock aus Monomeren B repräsentiert, wobei der Polymerblock P(B) eine Erweichungstemperatur im Bereich von - 130 °C bis + 10 °C aufweist,
- P(B) auf Basis von (Meth-)Acrylsäurederivaten zusammengesetzt ist,
- die Polymerblöcke P(A) und P(B) nicht homogen miteinander mischbar sind und
- die den Polymerblöcken P(A) und P(B) entsprechenden (Co)Polymere P*(A) und P*(B) jeweils eine Oberflächenspannung von ≤ 45 mJ/$m^2$ besitzen,

für reversible Verklebungen.

**2.** Verwendung nach Anspruch 1 für Verklebungen auf Papier.

**3.** Verwendung nach mindestens einem der Ansprüche 1 und 2, **dadurch gekennzeichnet, daß**
der Aufbau zumindest eines Blockcopolymers durch eine oder mehrere der folgenden allgemeinen Formeln beschrieben werden kann:

$$P(A)\text{-}P(B)\text{-}P(A) \qquad (I)$$

$$P(B)\text{-}P(A)\text{-}P(B)\text{-}P(A)\text{-}P(B) \qquad (II)$$

$$[P(B)\text{-}P(A)]_nX \qquad (III)$$

$$[P(B)\text{-}P(A)]_nX[P(A)]_m \qquad (IV),$$

- wobei n = 3 bis 12, m = 3 bis 12 und X eine multifunktionelle Verzweigungseinheit darstellt, also ein chemisches Bauelement, über das verschiedene Polymerarme miteinander verknüpft sind,
- wobei die Polymerblöcke P(A) unabhängig voneinander Homo- und/oder Copolymerblöcke aus den Monomeren A repräsentieren, wobei die Polymerblöcke P(A) jeweils eine Erweichungstemperatur im Bereich von + 20 °C bis + 175 °C aufweisen,

- wobei die Polymerblöcke P(B) unabhängig voneinander Homo- und/oder Copolymerblöcke aus den Monomeren B repräsentieren, wobei die Polymerblöcke P(B) jeweils eine Erweichungstemperatur im Bereich von - 130 °C bis + 10 °C aufweisen
- und wobei die den Polymerblöcken P(A) und P(B) entsprechenden (Co)Polymere P*(A) und P*(B) jeweils eine Oberflächenspannung von ≤ 45 mJ/m$^2$ besitzen.

4. Verwendung nach zumindest einem der vorangehenden Ansprüche, **dadurch gekennzeichnet, daß** zumindest ein Blockcopolymer einen symmetrischen Aufbau derart aufweist, daß in der Kettenlänge und/oder der chemischen Struktur identische Polymerblöcke P(A) und/oder daß in der Kettenlänge und/oder der chemischen Struktur identische Polymerblöcke P(B) vorliegen.

5. Verwendung nach zumindest einem der vorangehenden Ansprüche, **dadurch gekennzeichnet, daß** zumindest ein Blockcopolymer eines oder mehrere der folgenden Kriterien aufweist:

   - eine Molmasse $M_n$ zwischen 10.000 und 600.000 g/mol,
   - eine Polydispersität D = $M_w/M_n$ von nicht mehr als 3,
   - einen Anteil der Polymerblöcke P(A) zwischen 5 und 49 Gew.-%, bezogen auf die Triblockcopolymerzusammensetzung,
   - eine oder mehrere aufgepfropfte Seitenketten.

6. Verwendung nach zumindest einem der vorangehenden Ansprüche, **dadurch gekennzeichnet, daß** das Verhältnis der Kettenlängen der Polymerblöcke P(A) zu denen der Polymerblöcke P(B) so gewählt wird, daß die Polymerblöcke P(A) als disperse Phase ("Domänen") in einer kontinuierlichen Matrix der Polymerblöcke P(B) vorliegen, insbesondere als kugelförmige oder verzerrt kugelförmige oder zylindrische Domänen.

7. Verwendung nach zumindest einem der vorangehenden Ansprüche, **dadurch gekennzeichnet, daß** die Haftklebemasse ein Polymerblend eines oder mehrerer Blockcopolymere entsprechend den vorstehenden Ansprüchen darstellt
mit zumindest einem Diblockcopolymer P(A)-P(B),

   - wobei die Polymerblöcke P(A) (der einzelnen Diblockcopolymere) unabhängig voneinander Homo- und/oder Copolymerblöcke aus den Monomeren A repräsentieren, wobei die Polymerblöcke P(A) jeweils eine Erweichungstemperatur im Bereich von + 20 °C bis + 175 °C aufweisen,
   - wobei die Polymerblöcke P(B) (der einzelnen Diblockcopolymere) unabhängig voneinander Homo- und/oder Copolymerblöcke aus den Monomeren B repräsentieren, wobei die Polymerblöcke P(B) jeweils eine Erweichungstemperatur im Bereich von - 130 °C bis + 10 °C aufweisen
   - und wobei die den Polymerblöcken P (A) und P (B) entsprechenden (Co) Polymere P* (A) und P* (B) jeweils eine Oberflächenspannung von ≤ 45 mJ/m$^2$ besitzen,

   und/oder enthaltend Polymere P'(A) und/oder P'(B),

   - wobei die Polymere P'(A) Homo- und/oder Copolymere aus den Monomeren A repräsentieren, wobei die Polymere P'(A) jeweils eine Erweichungstemperatur im Bereich von + 20 °C bis + 175 °C aufweisen,
   - wobei die Polymere P'(B) Homo- und/oder Copolymere aus den Monomeren B repräsentieren, wobei die Polymere P'(B) jeweils eine Erweichungstemperatur im Bereich von - 130 °C bis + 10 °C aufweisen,
   - wobei die Polymere P'(A) beziehungsweise P'(B) bevorzugt mit den Polymerblöcken P(A) beziehungsweise P(B) mischbar sind
   - und wobei die Polymere P'(A) und P'(B) jeweils eine Oberflächenspannung von ≤ 45 mJ/m$^2$ besitzen.

8. Verwendung nach zumindest einem der vorangehenden Ansprüche, **dadurch gekennzeichnet, daß** zumindest ein Diblockcopolymer eines oder mehrere der folgenden Kriterien aufweist:

   - eine Molmasse $M_n$ zwischen 5.000 und 600.000 g/mol,
   - eine Polydispersität D = $M_w/M_n$ von nicht mehr als 3,
   - einen Anteil der Polymerblöcke P(A) zwischen 3 und 50 Gew.-%, bezogen auf die Diblockcopolymerzusammensetzung,
   - eine oder mehrere aufgepfropfte Seitenketten.

**9.** Verwendung nach zumindest einem der vorangehenden Ansprüche, **dadurch gekennzeichnet, daß** als Monomere B für die Polymerblöcke P(B) und/oder für die Polymere P'(B) Verbindungen aus den folgenden Gruppen gewählt werden:

- 75 bis 100 Gew.-% Acrylsäure- und/oder Methacrylsäurederivate der allgemeinen Struktur (VI)

$$CH_2=CH(R^1)(COOR^2) \qquad (VI)$$

wobei $R^1$ = H oder $CH_3$ und $R^2$ = H oder lineare, verzweigte oder cyclische, gesättigte oder ungesättigte Alkylreste mit 1 bis 30 Kohlenstoffatomen darstellt,
- 0 bis 25 Gew.-% Vinylverbindungen, welche funktionelle Gruppen enthalten.

**10.** Verwendung nach zumindest einem der vorangehenden Ansprüche, **dadurch gekennzeichnet, daß** der Haftklebemasse Klebharze beigemischt sind, insbesondere solche, die mit den Polymerblöcken P(B) verträglich sind, und/oder daß der Haftklebemasse Weichmacher, Füllstoffe, Keimbildner, Blähmittel, Compoundierungsmittel und/oder Alterungsschutzmittel zugesetzt sind.

## Revendications

**1.** Utilisation de systèmes d'adhésifs sensibles à la pression comprenant au moins un adhésif sensible à la pression à base d'au moins un copolymère séquencé, au moins un copolymère séquencé comprenant au moins le motif P (A)-P(B)-P(A) composé d'au moins une séquence polymère P(B) et d'au moins deux séquences polymères P(A), dans lesquelles

- P(A) indépendamment les unes des autres représentent des séquences d'homopolymères et/ou de copolymères de monomères A, les séquences polymères P(A) ayant chacune une température de ramollissement dans la gamme de +20 °C à +175 °C,
- P(B) représente une séquence homopolymère ou copolymère de monomères B, la séquence polymère P(B) ayant une température de ramollissement dans la gamme de -130 °C à +10 °C,
- P(B) étant composé sur la base de dérivés d'acide (méth)acrylique,
- les séquences polymères P(A) et P(B) ne sont pas miscibles de manière homogène entre elles, et
- les (co)polymères P*(A) et P*(B) correspondant aux séquences polymères P(A) et P(B) possèdent chacun une tension de surface ≤ 45 mJ/$m^2$,

pour des collages réversibles.

**2.** Utilisation selon la revendication 1 pour des collages sur du papier.

**3.** Utilisation selon au moins l'une des revendications 1 et 2, dans laquelle la structure d'au moins un copolymère séquencé peut être décrite par une ou plusieurs des formules générales suivantes :

$$P(A)-P(B)-P(A) \qquad (I)$$

$$P(B)-P(A)-P(B)-P(A)-P(B) \qquad (II)$$

$$[P(B)-P(A)]_nX \qquad (III)$$

$$[P(B)-P(A)]_nX[P(A)]_m \qquad (IV)$$

- où n = 3 à 12, m = 3 à 12, et X est un motif de ramification polyfonctionnelle, c'est-à-dire, une séquence de

structure chimique au moyen de laquelle on lie entre eux différents bras polymères ;
- où les séquences polymères P(A) indépendamment les unes des autres représentent des séquences homopolymères et/ou copolymères des monomères A, les séquences polymères P(A) ayant chacune une température de ramollissement dans la gamme de +20 °C à +175 °C,
- où les séquences polymères P(B) indépendamment les unes des autres représentent des séquences homopolymères et/ou de copolymères des monomères B, les séquences polymères P(B) ayant chacune une température de ramollissement dans la gamme de -130 °C à +10 °C,
- et où les (co)polymères P*(A) et P*(B) correspondant aux séquences polymères P(A) et P(B) possèdent chacun une tension de surface de ≤ 45 mJ/$m^2$.

**4.** Utilisation selon au moins l'une des revendications précédentes, dans laquelle au moins un copolymère séquencé a une structure symétrique telle qu'il y a des séquences polymères P(A) identiques en longueur de chaîne et/ou en structure chimique et/ou qu'il y a des séquences polymères P(B) identiques en longueur de chaîne et/ou en structure chimique.

**5.** Utilisation selon au moins l'une des revendications précédentes dans laquelle au moins un copolymère séquencé a un ou plusieurs des critères suivants :

- une masse molaire $M_n$ entre 10 000 et 600 000 g/mole,
- une polydispersité D = $M_w/M_n$ non supérieure à 3,
- une fraction de séquence polymère P(A) entre 5 et 49 % en poids, sur la base de la composition de copolymère triséquencé,
- une ou plusieurs chaînes latérales greffées.

**6.** Utilisation selon au moins l'une des revendications précédentes, dans laquelle le rapport de longueurs de chaîne des séquences polymères P(A) à celles des séquences polymères P(B) est choisi en sorte que les séquences polymères P(A) sont présentes sous la forme d'une phase dispersée (« domaines ») dans une matrice continue de séquences polymères P(B), en particulier sous la forme de domaines sphériques ou de domaines sphériques distordus ou de domaines cylindriques.

**7.** Utilisation selon au moins l'une des revendications précédentes, dans laquelle l'adhésif sensible à la pression constitue un mélange polymère d'un ou plusieurs copolymères séquencés selon les revendications ci-dessus
avec au moins un copolymère diséquencé P(A)-P(B),

- où les séquences polymères P(A) (des copolymères diséquencés individuels) indépendamment les unes des autres représentent des séquences homopolymères et/ou copolymères de monomères A, les séquences polymères P(A) ayant chacune une température de ramollissement dans la gamme de +20 °C à +175 °C,
- où les séquences polymères P(B) (des copolymères diséquencés individuels) indépendamment les unes des autres représentent des séquences homopolymères et/ou copolymères de monomères B, les séquences polymères P(B) ayant chacune une température de ramollissement dans la gamme de -130 °C à +10 °C,
- et où les (co) polymères P* (A) et P* (B) correspondant aux séquences polymères P (A) et P (B) possèdent chacun une surface de tension de ≤ 45 mJ/$m^2$,

et/ou contenant des polymères P'(A) et/ou P'(B),

- où les polymères P'(A) représentent des homopolymères et/ou des copolymères des monomères A, les polymères P'(A) ayant chacun une température de ramollissement dans la gamme de +20 °C à +175 °C,
- où les polymères P'(B) représentent des homopolymères et/ou copolymères des monomères B, les polymères P'(B) ayant chacun une température de ramollissement dans la gamme de -130 °C à +10 °C,
- où les polymères P'(A) et/ou P'(B) sont de préférence miscibles avec les séquences polymères P(A) et/ou P (B), respectivement,
- et où les polymères P'(A) et P'(B) possèdent chacun une tension de surface ≤ 45 mJ/$m^2$.

**8.** Utilisation selon au moins l'une des revendications précédentes, dans laquelle au moins un copolymère diséquencé a un ou plusieurs des critères suivants :

- une masse molaire $M_n$ entre 5000 et 600 000 g/mole,

- une polydispersité $D = M_w/M_n$ non supérieure à 3,
- une fraction de séquence polymère P(A) entre 3 et 50 % en poids, sur la base de la composition de copolymère diséquencé,
- une ou plusieurs chaînes latérales greffées.

**9.** Utilisation selon au moins l'une des revendications précédentes, dans laquelle comme monomères B pour les séquences polymères P(B) et/ou les polymères P'(B), on choisit des composés parmi les groupes suivants :

- 75 à 100 % en poids de dérivés d'acide acrylique et/ou méthacrylique de structure générale (VI)

$$CH_2{=}CH(R^1)\ (COOR^2) \qquad (VI)$$

dans laquelle $R^1$ = H ou $CH_3$ et $R^2$ = H ou des radicaux alkyle linéaires, ramifiés ou cycliques, saturés ou insaturés ayant de 1 à 30 atomes de carbone,
- de 0 à 25 % en poids de composés de vinyle qui contiennent des groupes fonctionnels.

**10.** Utilisation selon au moins l'une des revendications précédentes, dans laquelle l'adhésif sensible à la pression est mélangé avec des résines poisseuses, en particulier celles compatibles avec les séquences polymères P(B) et/ou dans lequel l'adhésif sensible à la pression est mélangé avec des plastifiants, des charges, des agents de nucléation, des agents de dilatation, des agents de mélange et/ou des inhibiteurs de vieillissement.

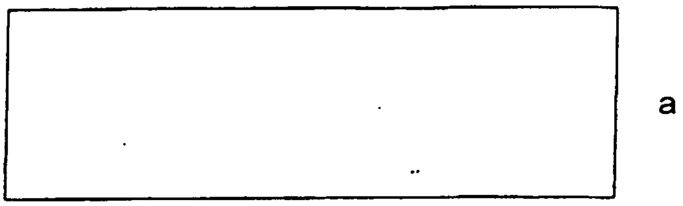


Fig. 1

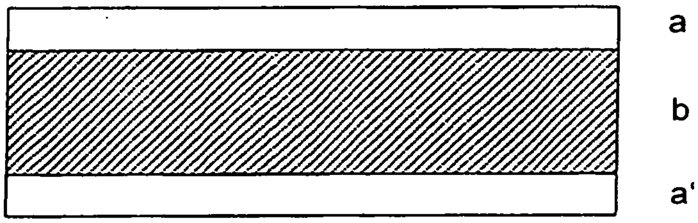


Fig. 2

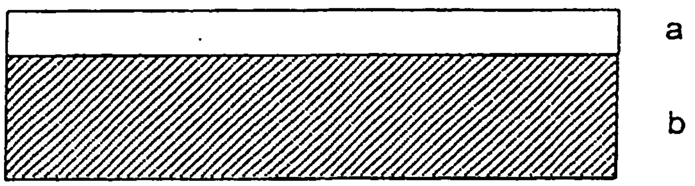


Fig. 3

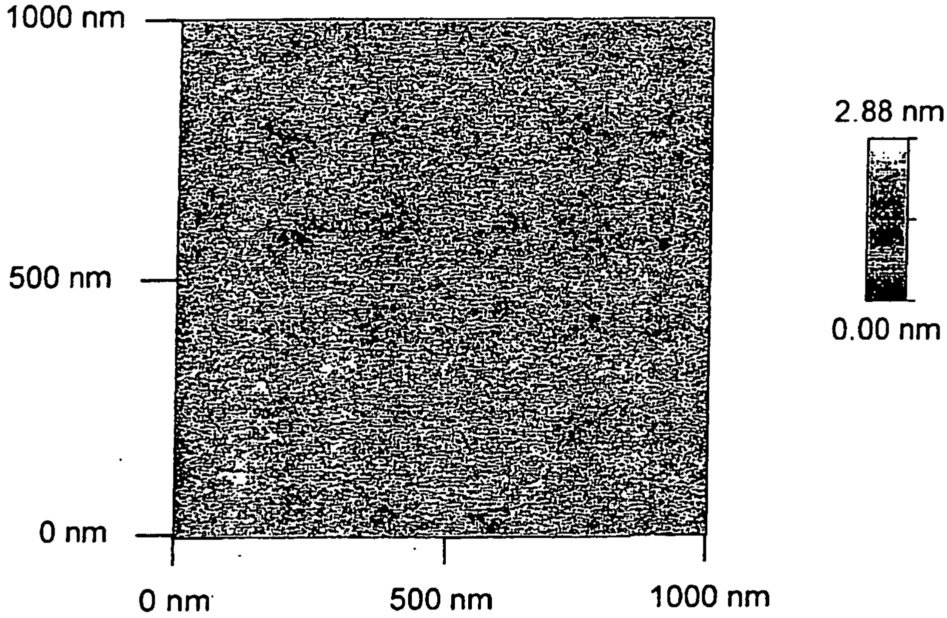


AFM image of Example 4

Fig. 4

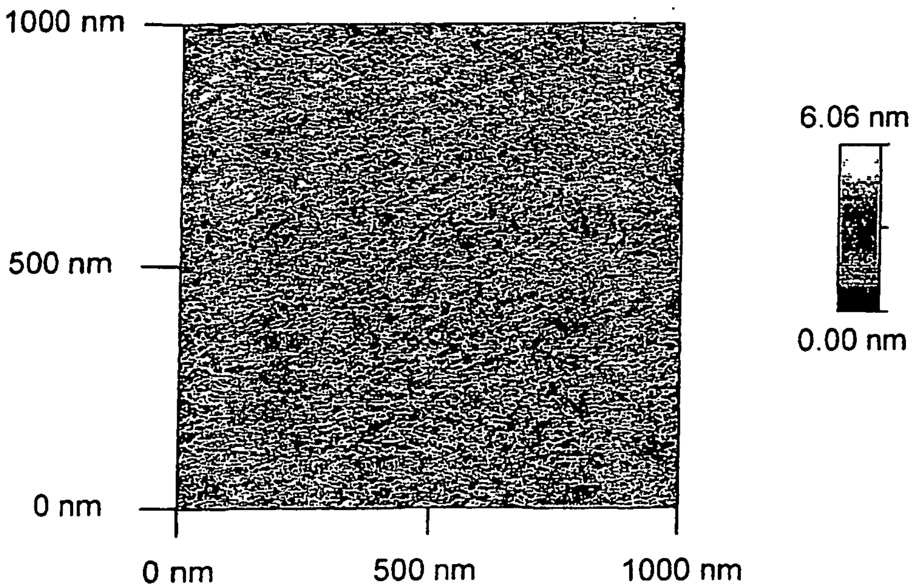


AFM image of Example 5

Fig. 5